# EUROPÄISCHE PATENTSCHRIFT

(11) **EP 2 092 398 B1**
(45) Veröffentlichungstag und Bekanntmachung des Hinweises auf die Patenterteilung: **14.07.2010**
(21) Anmeldenummer: 07847582.9
(22) Anmeldetag: 30.11.2007
(51) Int. Cl.: G05B 19/05

(54) **ZWEILEITERFELDGERÄT FÜR DIE PROZESSAUTOMATISIERUNGSTECHNIK ZUM ANSCHLUSS MINDESTENS EINES SENSORELEMENTS**
TWO-WIRE FIELD DEVICE FOR PROCESS AUTOMATION TECHNOLOGY FOR CONNECTING AT LEAST ONE SENSOR ELEMENT
APPAREIL DE TERRAIN BIFILAIRE POUR LA TECHNIQUE D'AUTOMATISATION DE PROCÉDÉS DESTINÉE À CONNECTER AU MOINS UN ÉLÉMENT DE CAPTEUR

(30) Priorität: 19.12.2006 DE 102006060447
(43) Veröffentlichungstag der Anmeldung: 26.08.2009
(73) Patentinhaber: Endress+Hauser Wetzer GmbH+CO. KG, 87484 Nesselwang (DE)
(72) Erfinder: JOEGEL, Thomas, 87509 Immenstadt (DE); KONRAD, Stephan, 87669 Rieden (DE); UMKEHRER, Alfred, 87659 Hopferau (DE)
(74) Vertreter: Andres, Angelika Maria
(86) Internationale Anmeldenummer: PCT/EP2007/063066
(87) Internationale Veröffentlichungsnummer: WO 2008/074609

(56) Entgegenhaltungen:
- EP-A- 0 355 532
- EP-A- 0 666 631
- WO-A-2005/031481
- US-B1- 6 574 515

## Beschreibung

Die Erfindung betrifft ein Zweileiterfeldgerät für die Prozessautomatisierungstechnik zum Anschluss mindestens eines Sensorelements gemäß dem Oberbegriff des Anspruchs 1.

Aus der US 6,574,515 ist ein gattungsgemäßes Zweileiterfeldgerät für die Prozessautomatisierungstechnik bekannt, an das mehrere Sensorelemente anschließbar sind und das über eine Zweileiterprozessregelschleife mit Energie versorgt wird. Die von den Sensorelementen gelieferten Messwerte werden in einem Verarbeitungsmodul aufbereitet und über eine Kommunikationsschnittstelle, die an die Zweileiterprozessregelschleife angeschlossen ist, an eine übergeordnete Einheit übertragen.

Bei diesem Zweileiterfeldgerät sind jeweils mehrere Sensorelemente zu Sensor-Gruppen zusammengefasst, die jeweils über einen Multiplexer mit dem Verarbeitungsmodul verbunden sind. Die Datenübertragung zwischen Multiplexer und Verarbeitungsmodul erfolgt digital. Zur galvanischen Trennung der Sensorelemente vom Verarbeitungsmodul ist nach dem Multiplexer ein Isolator in der Kommunikationsleitung vorgesehen. Die Energieversorgung der einzelnen Sensorelemente erfolgt über eine separate Spannungsversorgungsleitung, in der zur galvanischen trennung ein weiterer Isolator erforderlich ist.

Ein Nachteil dieser Vorrichtung besteht darin, dass bei jeder Sensor-Gruppe sowohl in der Kommunikationsleitung wie auch in der Spannungsversorgungsleitung jeweils eine galvanische Trennung notwendig ist.

Ein weiterer Nachteil dieser Vorrichtung besteht noch darin, dass zu jedem Sensorelement vier Leitungen geführt werden müssen, was einen erheblichen Verkabelungsaufwand erfordert.

Aufgabe der Erfindung ist es deshalb, ein Zweileiterfeldgerät für die Prozessautomatisierungstechnik zum Anschluss mindestens eines Sensorelements anzugeben, das die oben genannten Nachteile nicht aufweist, das insbesondere einen geringen Verkabelungsaufwand erfordert, das einfach galvanisch zu isolieren ist und das einfach und kostengünstig herstellbar ist.

Gelöst wird diese Aufgabe durch die im Anspruch 1 angegebenen Merkmale.

Vorteilhafte Weiterentwicklungen der Erfindung sind in den Unteransprüchen angegeben.

Die wesentliche Idee der Erfindung besteht darin, bei einem Zweileiterfeldgerät, das über einen Feldbus mit Energie versorgt wird, die einzelnen Sensorelemente über einen Sensorbus an die Verarbeitungseinheit anzuschließen und eine galvanische Trennung zwischen dem Feldbus und dem Sensorbus vorzusehen. Die galvanische Trennung kann entsprechend der drei Ausführungsbeispiele unterschiedlich im Feldgerät angeordnet sein.

Damit reduziert sich die Anzahl der benötigten galvanischen Trennungen. Außerdem ist auch der Verkabelungsaufwand zu den einzelnen Sensorelementen geringer.

Nachfolgend ist die Erfindung anhand eines in der Zeichnung dargestellten Ausführungsbeispiels näher erläutert.

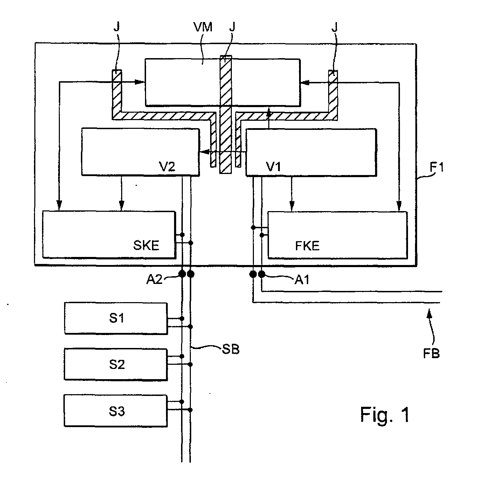

Es zeigen: Fig. 1 Blockschaltbild eines erfindungsgemäßen Zweileiterfeldgerätes.

Fig. 2 erste alternative Ausgestaltung eines Feldgeräts nach Fig. 1;

Fig. 3 zweite alternative Ausgestaltung eines Feldgeräts nach Fig. 1;

Fig. 4 dritte alternative Ausgestaltung eines Feldgeräts nach Fig. 1;

Fig. 5 drei Varianten einer galvanischen Isolationsschaltung für ein Feldgerät nach Fig. 1.

In Fig. 1 ist ein Zweileiterfeldgerät für die Prozessautomatisierungstechnik zum Anschluss mindestens eines Sensorelementes schematisch dargestellt. Das Feldgerät F1 weist eine Feldbuskommunikationseinheit FKE auf, die mit einem Feldbus FB über einen ersten Zweileiteranschluss A1 angeschlossen ist. Ebenfalls mit dem ersten Zweileiteranschluss A1 ist eine Versorgungseinheit V1 verbunden. Die Versorgungseinheit V1 dient zur Energieversorgung der einzelnen elektrischen Komponenten des Feldgeräts F1. Die gesamte Energie für das Feldgerät F1 wird, wie bei Zweileiterfeldgeräten üblich, über den Feldbus FB geliefert. Neben der ersten Versorgungseinheit V1 ist eine zweite Versorgungseinheit V2 vorgesehen, die über einen zweiten Zweileiteranschluss A1 mit einem Sensorbus SB verbunden ist. An den Sensorbus SB sind mehrere Sensorelemente S1, S2, S3 angeschlossen. Die zweite Versorgungseinheit V2 dient zur Energieversorgung der an den Sensorbus SB angeschlossenen Sensorelemente. Sie bezieht ihre Energie ebenfalls von der Versorgungseinheit V1.

Weiterhin ist mit dem zweiten Zweileiteranschluss A2 eine Sensorkommunikationseinheit SKE, die auch von der zweiten Versorgungseinheit V2 mit Energie versorgt wird. Als zentrale Verarbeitungseinheit für die von den Sensorelementen S1, S2, S3 gelieferten Daten (z.B. Messwerte) dient ein Verarbeitungsmodul VM, das mit der Sensorbuskommunikationseinheit SKE und mit der Feldbuskommunikationseinheit FKE verbunden ist. Im Verarbeitungsmodul VM werden die Messwerte der Sensorelemente aufbereitet und an die Feldbuskommunikationseinheit FKE zur Übertragung über den Feldbus weitergeleitet. Die Kommunikation über den Feldbus FB kann zum Beispiel nach dem Profibus-Standard erfolgen. Bei dem Sensorbussystem kann es sich zum Beispiel um einen HART-Multitropsystem oder Profibus-System handeln.

Die Feldbuskommunikationseinheit FKE und die Sensorbuskommunikationseinheit SKE sind jeweils für die Datenübertragung über das entsprechende Bussystem verantwortlich (physikalische Busanschaltung bzw. Telegrammaufbau).

Als gestrichelte Balken sind drei Alternativen dargestellt, wo eine galvanische Trennung sinnvoll ist.

Der wesentliche Vorteil der Erfindung besteht darin, dass die galvanische Trennung nur an zwei Stellen vorgesehen werden muss. Außerdem ist der Verkabelungsaufwand für die einzelnen Sensorelemente erheblich geringer

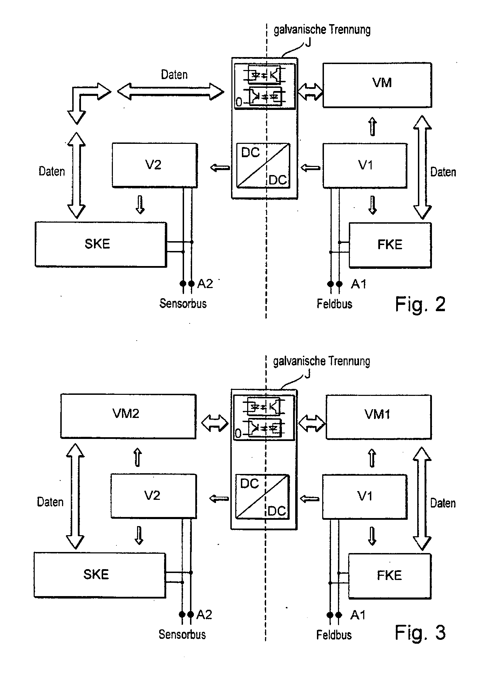

Drei alternative Ausgestaltungen der Erfindung sind in den Figuren 2-4 mit jeweils einer galvanischen Isolationsschaltung I schematisch dargestellt.

In Fig. 2 ist die galvanische Isolationsschaltung I zwischen der ersten und zweiten Versorgungseinheit V1 und V2 sowie zwischen dem Verarbeitungsmodul VM und der Sensorbuskommunikationseinheit SKE angeordnet. Das Verarbeitungsmodul VM besteht im Wesentlichen aus einem Mikrocontroller mit CPU und verschiedenen Speichereinheiten RAM, ROM, EEPROM.

Gemäß Fig. 3 ist die galvanische Isolationsschaltung I zwischen zwei Teilen VM1, VM2 des zweiteilig ausgeführten Verarbeitungsmoduls VM angeordnet. Die beiden Teile VM1. VM2 bestehen jeweils einem separaten Mikrocontroller, wobei der Mikrocontroller im Verarbeitungsmodul VM1 als Master und der Mikrocontroller im Verarbeitungsmodul VM2 als Slave dienen.

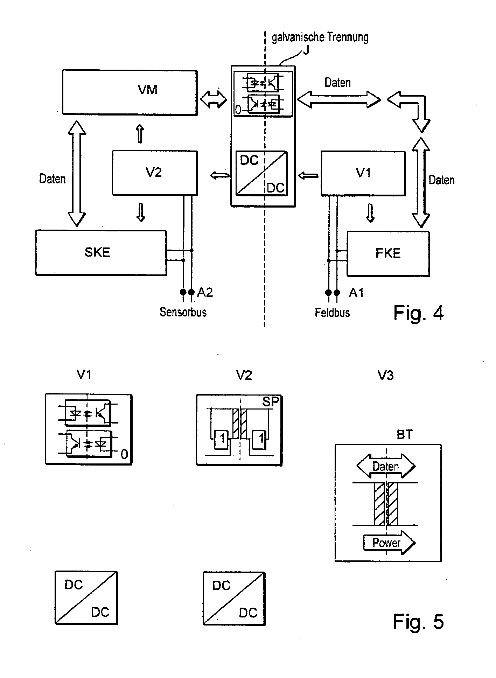

Gemäß Fig. 4 ist die galvanische Isolationsschaltung I zwischen der ersten und zweiten Versorgungseinheit V1 und V2 sowie zwischen dem Verarbeitungsmodul VM und der Feldbuskommunikationseinheit FKE angeordnet.

Die galvanische Isolierschaltung I besteht bei allen drei Alternativen (Fig.2-Fig.4) aus einem Optokoppler O für die Datenübertragung und einen Gleichspannungswandler DC/DC (DC/DC-Wandler) zur Energieübertragung.

In Fig. 5 ist dargestellt, dass der Optokoppler O auch durch ein Spulenpaar SP ersetzt werden kann. Als weitere Variante ist denkbar den

Gleichspannungswandler DC/DC und das Spulenpaar SP auch in einem Bauteil BT zu realisieren.

In einer alternativen Ausgestaltung der Erfindung, kann in jedem der Sensorelemente eine separate galvanische Trennung vorgesehen sein.

Die vorliegende Erfindung erlaubt es in einfacher Weise mehrer Sensorelemente S1, S2, S3 galvanisch von einem Feldbus FB zu isolieren.

## Patentansprüche

1. Zweileiterfeldgerät für die Prozessautomatisierungstechnik zum Anschluss mindestens eines Sensorelements bestehend aus
einem ersten Versorgungsteil V1, das über einen ersten 2-Leiter-Anschluss A1 mit einem Feldbus FB, über den das Feldgerät FB vollständig mit Energie versorgt wird, verbindbar ist,
einer Feldbuskommunikationseinheit FKE, die mit dem ersten 2-Leiter-Anschluss A1 und dem ersten Versorgungsteil V1 verbunden ist und die zum Datenaustausch über den Feldbus dient,
einem Verarbeitungsmodul VM, das mit der Feldbuskommunikationseinheit FSK, der Sensorbuskommunikationseinheit SKE und dem ersten Versorgungsteil V1 verbunden ist,
**dadurch gekennzeichnet,**
**dass** ein zweites Versorgungsteil V2 an das erste Versorgungsteil V1 angeschlossen ist und über einen zweiten 2-Leiter-Anschluss A2 zur Energieversorgung eines Sensorbusses SB dient,
**dass** eine Sensorbuskommunikationseinheit SKE mit dem zweiten 2-Leiter-Anschluss A2 und dem zweiten Versorgungsteil V2 verbunden ist und zum Datenaustausch über den Sensorbus dient,
**dass** der Feldbus FB und der Sensorbus SB galvanisch voneinander getrennt sind.

2. Zweileiterfeldgerät nach Anspruch 1, **dadurch gekennzeichnet, dass** die galvanische Isolation zwischen dem Verarbeitungsmodul VM und der Sensorkommunikationseinheit SKE bzw. dem Versorgungsteil V1 und dem Versorgungsteil V2 vorgesehen ist.

3. Zweileiterfeldgerät nach Anspruch 1, **dadurch gekennzeichnet, dass** die galvanische Isolation zwischen dem Verarbeitungsmodul VM und der Feldbuskommunikationseinheit FKE bzw. dem Versorgungsteil V1 und dem Versorgungsteil V2 vorgesehen ist.

4. Zweileiterfeldgerät nach Anspruch 1, **dadurch gekennzeichnet, dass** das Verarbeitungsmodul VM zweiteilig ausgebildet ist, und die galvanische Isolation zwischen den beiden Teilen V1 bzw. V2 des Verarbeitungsmoduls VM bzw. dem Versorgungsteil V1 und dem Versorgungsteil V2 vorgesehen ist.

## Claims

1. Two-wire field device for process automation engineering for connecting at least one sensor element, comprising:
- a first supply unit VI, which can be connected, via a first 2-wire connection, to a fieldbus FB via which the field bus FB is completely powered
- a field bus communication unit FKE, which is connected to the first 2-wire connection A1 and the first supply unit V1 and which is used to exchange data via the fieldbus
- a processing module VM, which is connected to the field bus communication unit FSK, the sensor bus communication unit SKE and a first supply unit V1, **characterized in that**:
- a second supply unit V2 is connected to the first supply unit V1 and is used to supply power to a sensor bus SB via a second two-wire connection
- a sensor bus communication unit SKE is connected to the second two-wire connection A2 and the second supply unit V2 and is used to exchange data via the sensor bus
- the fieldbus FB and the sensor bus SB are galvanically isolated from one another.

2. Two-wire field device as per Claim 1, **characterized in that** galvanic isolation is provided between the processing module VM and the sensor communication unit SKE, or between the supply unit V1 and the supply unit V2.

3. Two-wire field device as per Claim 1, **characterized in that** galvanic isolation is provided between the processing module VM and the field bus communication unit FKE, or between the supply unit V1 and the supply unit V2.

4. Two-wire field device as per Claim 1, **characterized in that** the processing module VM is designed in two parts and galvanic isolation is provided between the two parts V1 and V2 of the processing module VM, or between the supply unit V1 and the supply unit V2.

## Revendications

1. Appareil de terrain bifilaire destiné à la technique d'automatisation des process, pour le raccordement d'au moins un élément capteur constitué
d'une première unité d'alimentation V1, laquelle peut être reliée à travers une première connexion bifilaire A1 à un bus de terrain FB, par l'intermédiaire duquel l'appareil de terrain FB est alimenté intégralement en énergie,
d'une unité de communication bus de terrain FKE, qui est reliée à la première connexion bifilaire A1 et à la première unité d'alimentation V1, et laquelle sert à l'échange de données à travers le bus de terrain,
d'un module de traitement VM, qui est relié à l'unité de communication bus de terrain FKE, l'unité de communication bus de capteurs SKE et à l'unité d'alimentation V1,
**caractérisé en ce**
**qu'**une deuxième unité d'alimentation V2 est raccordée à la première unité d'alimentation V1 et sert, par l'intermédiaire d'une deuxième connexion bifilaire A2, d'alimentation en énergie d'un bus de capteurs SB,
**qu'**une unité de communication bus de capteurs SKE est reliée à la deuxième connexion bifilaire A2 et la deuxième unité d'alimentation V2, et sert à l'échange de données à travers le bus de capteurs,
**que** le bus de terrain FB et le bus de capteurs SB sont séparés galvaniquement l'un par rapport à l'autre.

2. Appareil de terrain bifilaire selon la revendication 1, **caractérisé en ce qu'**est prévue l'isolation galvanique entre le module de traitement VM et l'unité de communication capteurs SKE, ou entre l'unité d'alimentation V1 et l'unité d'alimentation V2.

3. Appareil de terrain bifilaire selon la revendication 1, **caractérisé en ce qu'**est prévue l'isolation galvanique entre le module de traitement VM et l'unité de communication bus de terrain FKE, ou entre l'unité d'alimentation V1 et l'unité d'alimentation V2.

4. Appareil de terrain bifilaire selon la revendication 1, **caractérisé en ce que** le module de traitement VM est constitué de deux parties, et **en ce qu'**est prévue l'isolation galvanique entre les deux parties V1 ou V2 du module de traitement VM, ou entre l'unité d'alimentation V1 et l'unité d'alimentation V2.
